# EUROPEAN PATENT APPLICATION

(11) **EP 4 024 927 A1**
(43) Date of publication of application: **06.07.2022**
(21) Application number: 20217869.5
(22) Date of filing: 30.12.2020
(51) Int. Cl.: H04W 12/06, H04L 9/32, H04L 29/06

(54) **SELF-SOVEREIGN SECURE INFORMATION MANAGEMENT**

(71) Applicant: Blok Digital Solutions Ltd, Business Village Lordswood Chatham, Kent ME5 8LF (GB)
(72) Inventor: WOLANOW, Andrew Areiel Berry, Weston-Super-Mare, Somerset BS23 1XA (GB)
(74) Representative: Script IP Limited

(57) **Abstract**

Aspects and embodiments relate to secure data processing apparatus, methods and computer program products. One aspect provides a secure data processing apparatus configured to securely process user data owned by a user. The secure data processing apparatus comprises: a self-sovereign domain which itself comprises: a trusted bus coupled with local trusted data storage configured to store the user data owned by the user at the secure data processing apparatus and local trusted data processing apparatus configured to process user data in the local trusted data storage at the secure data processing apparatus, to process incoming user-related information received over the trusted bus and to generate outgoing user-related information. The secure data processing apparatus further comprises: a self-sovereign domain controller which comprises: transaction logic coupling the trusted bus of the self-sovereign domain with an agent bus of an agent domain. The transaction logic is configured to: (i) seek permission from the user in relation to any interaction between the agent domain and the self-sovereign domain; and subject to permission to an interaction being granted by the user, (ii) allow the agent domain to query the user data using one or more predetermined query elements, such that the local trusted data processing apparatus generates outgoing user-related information in response to the query elements in which inclusion of the user data is prevented. Arrangements can allow a user to maintain full control of their own data and information. The only copy or version of the user information exists locally to a user on the secure data processing apparatus, access to that data can only occur via transaction logic by an agent, with permission of a user and to query the user information, an agent must use the transaction logic and a set of predetermined query elements.

## Description

### FIELD OF THE INVENTION

Aspects and embodiments relate to a secure data processing apparatus, a method and a computer program product.

### BACKGROUND

Personal and private data generated in relation to an individual can be used in various useful ways, for example, in relation to personalized approaches to insurance, medical or insurance risk, medical diagnosis, therapy and similar. In particular, parties may increasingly seek access information relating to an individual or seek to generate a profile of information relating to an individual in order to use that information for commercial gain. Opportunities to purchase and use such individual profile information can be lucrative. One problem which arises is how an individual maintains control of their own personal and private data.

Centralized arrangements which hold and allow for exchange of personal and private information may suffer from a number of disadvantages. Storing all sensitive data in a single database makes such a database an attractive target for hackers. As a result, an individual providing personal information to a database owner knows that security of the personal information is controlled by the database owner. An individual also hands control of personal information to the database owner and maybe unaware of transactions which involve their personal information.

Decentralized arrangements where various parties hold different portions of personal private information in relation to an individual may also be problematic. When various parties want to make the private information relating to an individual available, and where many parties may want to obtain the information, it becomes hard to find a third party to hold a single database, or enable a transaction in a manner which is secure and which all parties involved are willing to trust to handle such a transaction.

It is desired to provide a mechanism according to which an individual may maintain or increase control of their own individual private information.

### SUMMARY

One aspect provides a secure data processing apparatus configured to securely process user data owned by a user, the secure data processing apparatus comprising: a self-sovereign domain comprising: a trusted bus coupled with local trusted data storage configured to store the user data owned by the user at the secure data processing apparatus and local trusted data processing apparatus configured to process user data in the local trusted data storage at the secure data processing apparatus, to process incoming user-related information received over the trusted bus and to generate outgoing user-related information; a self-sovereign domain controller comprising: transaction logic coupling the trusted bus of the self-sovereign domain with an agent bus of an agent domain, the transaction logic being configured to: (i) seek permission from the user in relation to any interaction between the agent domain and the self-sovereign domain; and subject to permission to an interaction being granted by the user, (ii) allow the agent domain to query the user data using one or more predetermined query elements, such that the local trusted data processing apparatus generates outgoing user-related information in response to the query elements in which inclusion of the user data is prevented.

The first aspect recognises that one problem which arises when generating personal information, is that a party generating information or "evidence" in relation to an individual may wish to store that evidence in their own secure manner and not necessarily allow an individual to hold that evidence, despite that evidence relating to the individual. As a consequence, a third party wishing to obtain that evidence in relation to an individual may need to seek the evidence directly from the party who generated the evidence in relation to the individual, meaning the individual may be unaware of who has obtained that evidence.

A third party seeking the evidence may not be willing to obtain the evidence directly from the individual since, whilst the individual may be aware of the evidence, the individual may not be as trustworthy as the party which generated the evidence in relation to the individual.

A third party may be interested in ascertaining evidence which is held in relation to an individual, but may be prohibited, for privacy or other reasons, from asking for that evidence directly. For example, a third party, for example, an airline, may be interested in determining whether a potential passenger meets their criteria for flying. Such criteria may include, for example, whether the passenger holds a valid passport or identity card and, for example, whether the potential passenger meets criteria relating to COVID status (for example, a negative COVID test, a valid vaccination certificate or similar). Access to a flight may depend on the passenger meeting various criteria, as set by an airline. Whilst an airline may not legally be allowed to ask a passenger whether they have been vaccinated, the airline may, for example, enquire as to whether a passenger is fit to fly.

In relation to all examples outlined above, it will be appreciated that it can be beneficial to provide technical means to allow interested parties to assess private personal evidence, whilst also offering security and confidentiality to the individual to whom the evidence relates. In particular, an arrangement in accordance with the first aspect allows a user to maintain full control of their own data and information. The only copy or version of the user information exists locally to a user on the secure data processing apparatus, access to that data can only occur via transaction logic by an agent, with permission of a user and to query the user information an agent must use the transaction logic and a set of predetermined query elements. Of course, such an arrangement is not without issues: it is the responsibility of the user to maintain the user data, for example, no backup of the user data may be provided, the only copy of the user data existing in local trusted data storage, access to which is restricted by use of the trusted domain controller. Some arrangements may allow a user to control their user data and choose to allow a copy of the user data to be stored in a location other than local trusted data storage, but the security of that user data may be lower that user data stored solely in the local trusted data storage.

The first aspect provides a secure data processing apparatus configured to securely process user data owned by a user. That secure data processing apparatus may, for example, comprise a mobile phone, smart phone, or other network connectable device. The secure data processing apparatus may be linked to, associated with or owned by an individual user. The secure data processing apparatus may include: a self-sovereign domain comprising: a trusted bus coupled with local trusted data storage configured to store the user data owned by the user at the secure data processing apparatus and local trusted data processing apparatus configured to process user data in the local trusted data storage at the secure data processing apparatus, to process incoming user-related information received over the trusted bus and to generate outgoing user-related information. In other words, there may be created a protected, self-sovereign, computing domain on a user device. That isolated domain creates a safe, secure environment within a potentially untrustworthy execution environment, and can allow information and processes which occur within that domain to occur within a secure and safe environment. The route for any third party into that secure domain occurs via a trusted "bus" or interface, controlled by a self-sovereign domain controller. The self-sovereign domain controller includes transaction logic coupling the trusted bus of the self-sovereign domain with an agent bus of an agent domain. The agent may themselves have a trusted, though not necessarily self-sovereign, domain. That agent domain may exist on a different device or apparatus, or may, for example, comprise a network of computing devices, such as one or more remote computers in the cloud. The agent domain may be configured to include an agent bus, via which it communicates with other domains. The transaction logic of the secure data processing apparatus may be configured to couple the agent bus with the trusted bus and therefore allow the agent domain to communicate with the self-sovereign domain and vice versa. The transaction logic may particularly be configured to: (i) seek permission from the user in relation to any interaction between the agent domain and the self-sovereign domain. The transaction logic, may, for example, take the form of a computer program product or "app" which allows an agent domain to communicate with the self-sovereign domain and vice versa. Any interaction between a user and an agent may be subject to appropriate permission being granted by the user. Subject to permission to an interaction being granted by the user, the transaction logic may be configured to allow the agent domain to query the user data using one or more predetermined query elements. Those query elements may then be passed to the local trusted data processing apparatus which may be configured to appropriately interrogate the user data held in the local trusted data storage. The local trusted data processing apparatus may, based on that interrogation of user data, generate outgoing user-related information in response to the query elements. The outgoing user-related information may be generated such that inclusion of the user data is prevented, but that the query formed from query elements is answered.

Aspects and embodiments may recognise that it is possible to provide a summary of the evidence that indicates whether the evidence held by an individual satisfies one or more predefined properties, without disclosing the evidence itself. For example, zero-knowledge proofs are known in the field of cryptography as a way to let a proving party (user) prove to a verifying or requesting party (agent) that the proving party (user) knows a certain value satisfying a certain property.

Some aspects may be such that interactions with an individual holding their own evidence are limited to a set of restricted queries. A trusted agent may generate a query from a set of predetermined query elements. The query may relate to one or more predefined property of the evidence forming the user data, and the query may seek to prove that the evidence held by the individual satisfies the predefined property, without giving visibility of the evidence which meets the predefined property to a querying agent.

In some, but not necessarily all, embodiments the user and an entity using the agent domain comprise verified entities within a secure self-sovereign information management system.

In some, but not necessarily all, embodiments the self-sovereign domain controller comprises: identity logic configured to: collect at least two forms of identity and store those forms of identity as user data in the local trusted data storage; display the two forms of identity on request of the user; receive an indication via the agent bus from a verified agent that the two forms of identity are attested to match the user; and store that the user is a verified entity as new data in the local trusted data storage.

In some, but not necessarily all, embodiments the transaction logic is further configured to: generate, using the local trusted data processing apparatus, an indication that the user wishes to initiate an interaction with an agent; receive that generated indication at the trusted bus and transfer that indication to an agent via the agent bus; receive an agent response at the agent bus, the agent response including one or more indication of a parameter associated with an interaction between the agent domain and the self-sovereign domain; transfer the agent response from the agent bus to the trusted bus; and generate, using the local trusted data processing apparatus, a user permission request based upon the agent response.

In some, but not necessarily all, embodiments the indication that the user wishes to initiate an interaction includes a single use contact identifier via which a communication network can contact the self-sovereign domain controller.

In some, but not necessarily all, embodiments the generated indication comprises a visual indication to be shown to an agent.

In some, but not necessarily all, embodiments the local trusted data processing apparatus is configured, in response to the user permission request being granted by a user, to generate an indication of consent and the transaction logic is further configured to transfer the indication of consent from the trusted bus to the agent bus and allow an agent read only access within the self-sovereign domain to a form of identity stored as user data in the local trusted data storage.

In some, but not necessarily all, embodiments the query formed from one or more predetermined query elements is such that when user data in the local trusted data storage is queried, only an answer to the query is returned to the agent bus of the agent domain, not any element of the user data itself.

In some, but not necessarily all, embodiments the query formed from one or more predetermined query elements comprises a binary query having a yes or no response, based upon an interrogation of whether the user data meets one or more criteria set by the query elements, and the only thing returned to the agent bus of the agent domain is a yes or no to indicate whether the user data meets the one or more criteria set by the query elements.

In some, but not necessarily all, embodiments the transaction logic is further configured to: receive new user data from an agent at the agent bus, the new user data including a request to include that new user data in the local trusted data storage; transfer that request to include new user data in the local trusted data storage to a user via the trusted bus; and, subject to receiving a positive response from a user; allow interaction between the agent domain and the self-sovereign domain and transfer the new user data from the trusted bus to the agent bus; and store, using the local trusted data processing apparatus, the new user data in the local trusted data storage.

In some, but not necessarily all, embodiments the self-sovereign domain controller further comprises: cryptographic logic coupling the trusted bus of the self-sovereign domain with an agent bus of an agent domain, the coupling logic being configured to ensure that incoming encrypted user-related information received over the agent bus is decrypted and provided over the trusted bus as the incoming user-related information and to ensure that outgoing user-related information is encrypted and provided over the agent bus as encrypted outgoing user-related information.

A second aspect provides a secure data processing method for securely processing user data owned by a user, the method comprising: providing a self-sovereign domain comprising: a trusted bus coupled with local trusted data storage configured to store the user data owned by the user at the secure data processing apparatus and local trusted data processing apparatus configured to process user data in the local trusted data storage at the secure data processing apparatus; processing incoming user-related information received over the trusted bus and generating outgoing user-related information using the user data and local trusted data processing apparatus and; coupling the trusted bus of the self-sovereign domain with an agent bus of an agent domain using a self-sovereign domain controller, the domain controller comprising: transaction logic configured to: (i) seek permission from the user in relation to any interaction between the agent domain and the self-sovereign domain; and subject to permission to an interaction being granted by the user, (ii) allow the agent domain to query the user data using one or more predetermined query elements, such that the local trusted data processing apparatus generates outgoing user-related information in response to the query elements in which inclusion of the user data is prevented.

A third aspect provides a computer program product operable, when executed on a computer, to perform the method steps of the second aspect. Accordingly, a computer program comprising computer readable instructions which, when executed by a computer on a node, are configured to cause said apparatus to perform a method according to the second aspect.

A fourth aspect provides data processing apparatus configured to interact with secure user data owned by a user and stored only in local trusted data storage controlled by the user, the data processing apparatus comprising: an agent domain comprising: an agent bus coupled with data storage configured to store agent data and data processing apparatus configured to process agent data and generate outgoing user-related information; an agent domain controller comprising: agent transaction logic coupling the agent bus of the agent domain with a trusted bus of a self-sovereign domain associated with a user, the agent transaction logic being configured to: (i) seek permission from the user in relation to any interaction between the agent domain and the self-sovereign domain; and subject to permission to an interaction being granted by the user, (ii) query the user data using one or more predetermined query elements, such that the self-sovereign domain generates user-related information in response to the query elements in which inclusion of the user data is prevented.

The fourth aspect provides the agent equivalent apparatus to the user apparatus set out in relation to the first aspect. Accordingly, analogous features to those set out in relation to the user apparatus of the first aspect maybe provided in relation to the fourth aspect, thereby allowing an agent domain and self-sovereign domain associated with a user to communicate with each other effectively whilst maintaining user data security. In particular, it will be appreciated that the interaction between the agent domain and the self-sovereign domain may be controlled by an appropriate application or "app" provided on an agent device and a user device as described in relation to particular implementations set out in the examples below. The self-sovereign domain controller and agent domain controller may each essentially comprise logic hosted or forming part of an appropriate interface or "app" as described in more detail in relation to general and specific examples.

A fifth aspect provides a data processing method for interacting with secure user data owned by a user and stored only in local trusted data storage controlled by the user, the data processing method comprising: providing an agent domain comprising: an agent bus coupled with data storage configured to store agent data and data processing apparatus configured to process agent data and generate outgoing user-related information; processing agent data and generating outgoing user-related information using the agent data and data processing apparatus and: coupling the agent bus of the agent domain with a trusted bus of a self-sovereign domain associated with a user using an agent domain controller the domain controller comprising: agent transaction logic configured to: (i) seek permission from the user in relation to any interaction between the agent domain and the self-sovereign domain; and subject to permission to an interaction being granted by the user, (ii) query the user data using one or more predetermined query elements, such that the self-sovereign domain generates user-related information in response to the query elements in which inclusion of the user data is prevented.

A sixth aspect provides a computer program product operable, when executed on a computer, to perform the method steps of the fifth aspect. Accordingly, a computer program comprising computer readable instructions which, when executed by a computer on a node, are configured to cause said apparatus to perform a method according to the fifth aspect may be provided.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function. Additionally, it will be understood that means configured to perform a function encompass logic or circuitry configured to perform that function and vice versa. In particular, logic or means configured to perform a function may comprise: at least one processor; and at least one memory including computer program code, said at least one memory and computer program code being configured to, with said at least one processor, cause the performance of the logic or means as appropriate.

### BRIEF DESCRIPTION OF THE DRAWINGS

Embodiments of the present invention will now be described further, with reference to the accompanying drawings, in which:
Figure 1 illustrates schematically some key entities within a framework for secure self-sovereign information management;
Figure 2 illustrates schematically some key interactions to verify a member to use an information management framework such as that shown in Figure 1;
Figure 3 illustrates schematically some key features relating to users of an agent interface for use within an information management framework such as that shown in Figure 1;
Figure 4 illustrates schematically some aspects of an agent interface for use within an information management framework such as that shown in Figure 1;
Figure 5 provides a general overview of interactions between a member and an agent operating within an information management framework such as that shown in Figure 1;
Figure 6 provides a general overview of a different interaction between a member and an agent operating within an information management framework such as that shown in Figure 1;
Figures 7 to 13 provide examples of steps taken within an information management framework such as that shown in Figure 1; in particular:

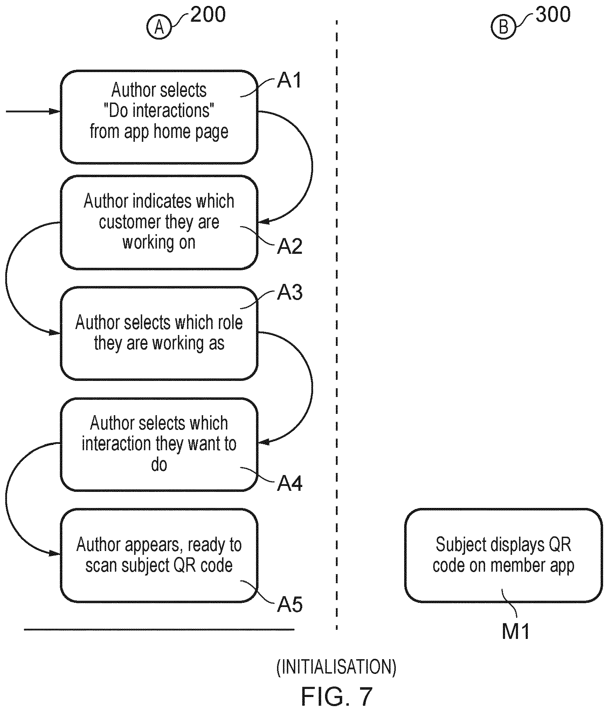

   Figure 7 illustrates one possible mechanism for initialisation steps associated with member and agent interfaces as part of a possible interaction process;

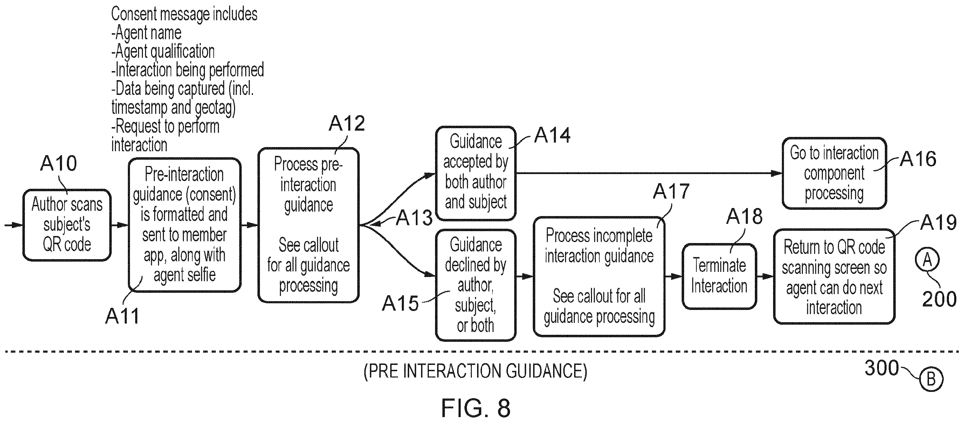

   Figure 8 illustrates possible initialisation steps in support of an interaction between a member and an agent;

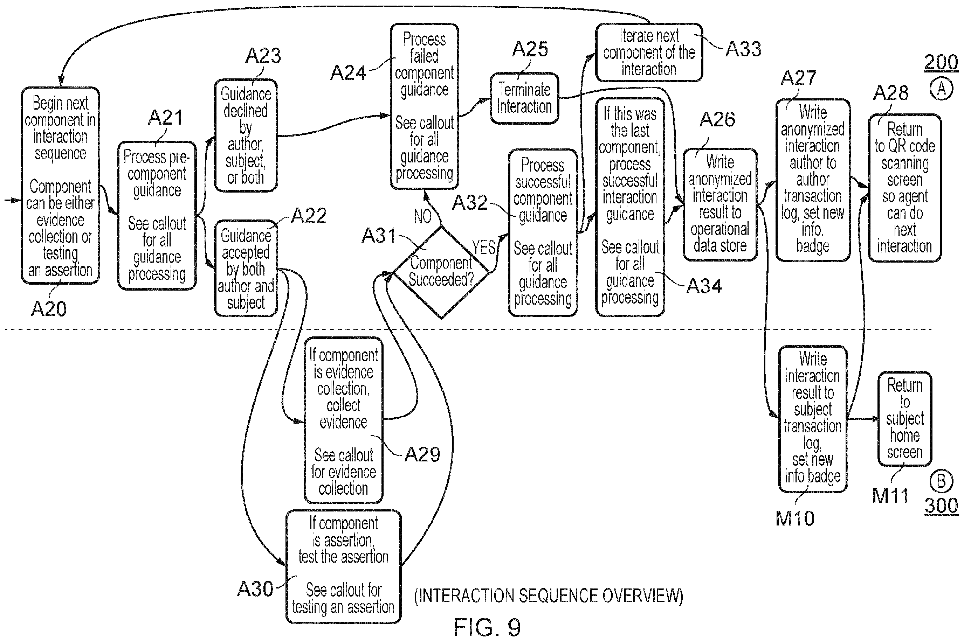

   Figure 9 illustrates some key stages in a possible interaction between a member and an agent;

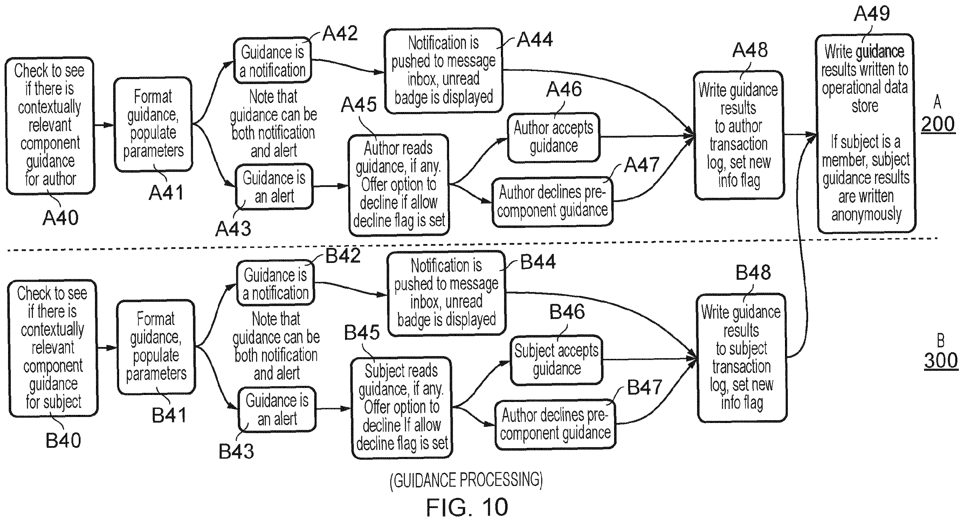

   Figure 10 illustrates possible guidance steps in a possible interaction between a member and an agent;

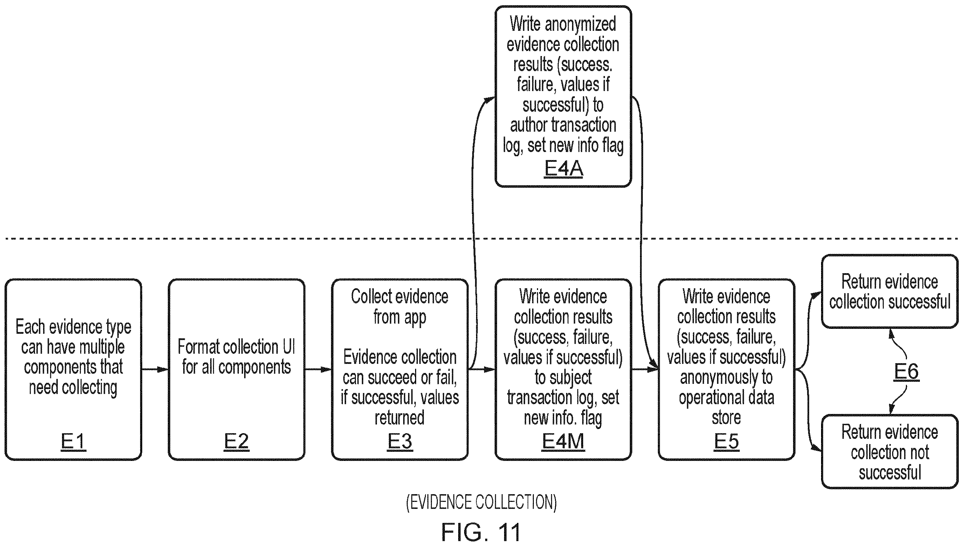

   Figure 11 illustrates some key stages in an evidence collection interaction between a member and an agent;

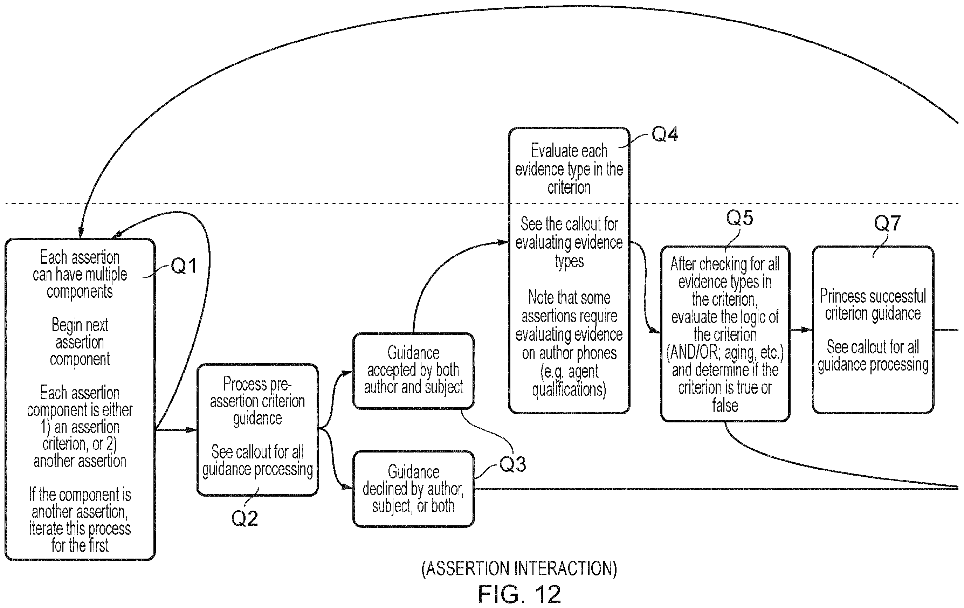

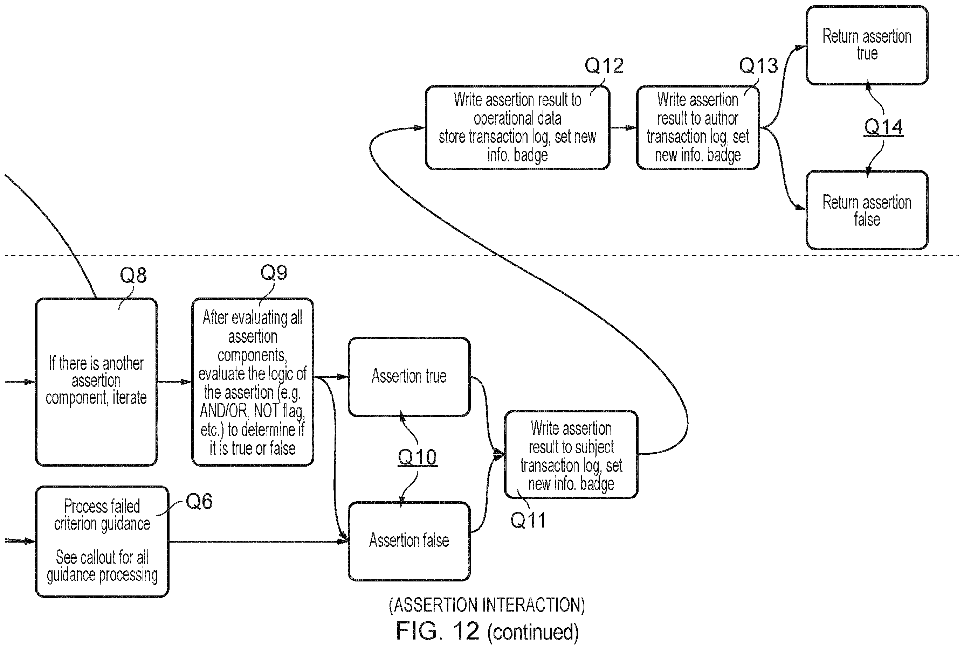

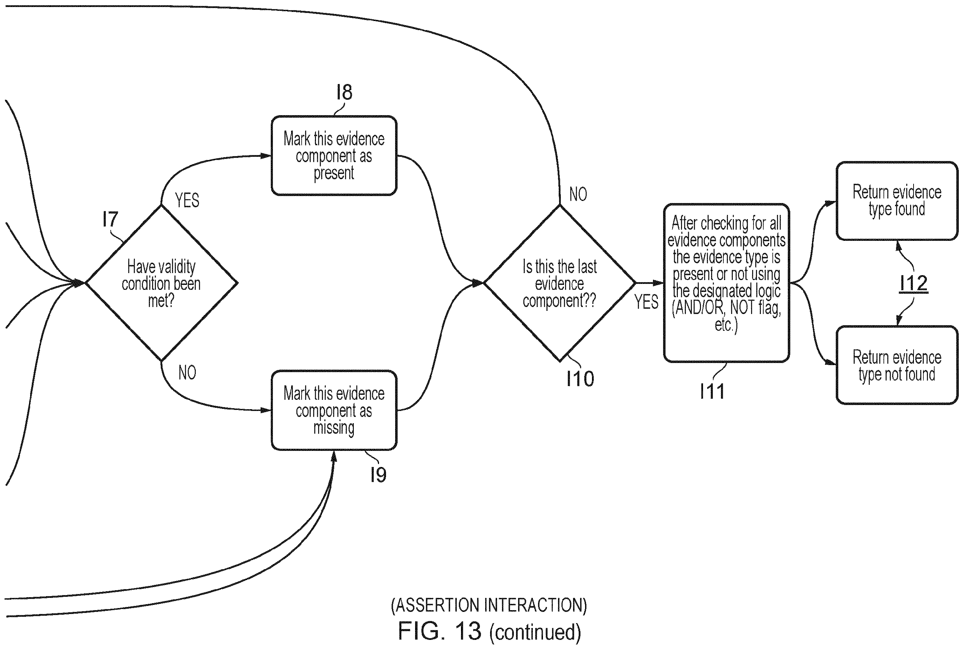

   Figure 12 illustrates some key stages in an assertion testing interaction between a member and an agent; and

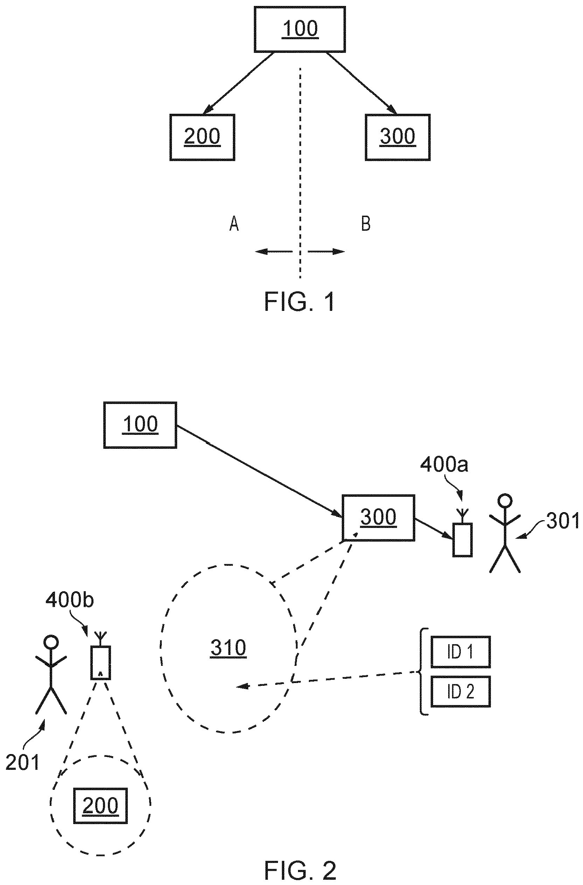

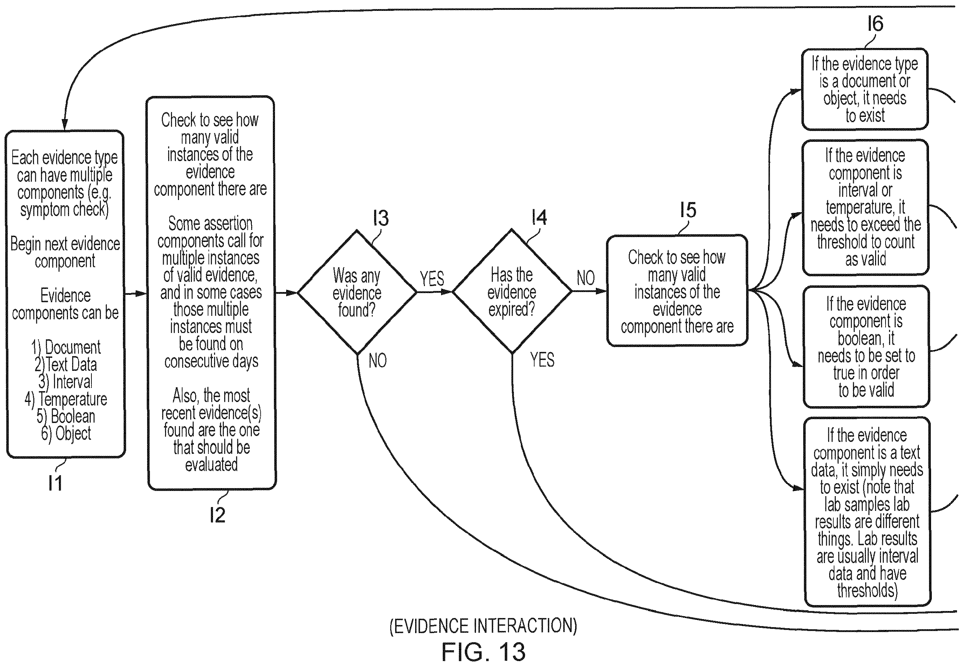

   Figure 13 illustrates some key stages in evidence evaluation performed within an information management framework such as that shown in Figure 1

### DESCRIPTION OF THE EMBODIMENTS

In the following detailed description, numerous specific details are set forth by way of example in order to provide an understanding of possible arrangements. It should, however, be apparent to those skilled in the art that arrangements described may be subject to various design choices or implementation variations. In some instances of described arrangements, well known methods, procedures, components, and/or hardware/software/firmware have been described at a relatively high-level of abstraction, without detail, in order to avoid unnecessarily obscuring key aspects of the arrangements described.

Before describing any particular arrangement in detail, a general overview is provided:
Figure 1 illustrates schematically some key entities within a framework for secure self-sovereign information management. The framework generally comprises: a transaction enabling entity 100 which can make available two types of interface to potential users of a transaction system. Those two types of interface comprise: a member interface, 300 available to individuals wishing to create and hold their own private data and secure self-sovereign information management capabilities; and an agent interface 200 available to entities, customers, and individuals wishing to interact and transact with individuals who have the member interface. The data and information held in the member interface (indicated generally by arrow B in Figure 1) is self-sovereign and controlled by each individual having chosen to hold their personal information within member interface 300. Interaction with information within the member interface is possible via the agent interface 200, subject to various conditions as set out in more detail below.

Figure 2 illustrates schematically some key interactions to verify a member to use an information management framework such as that shown in Figure 1. As shown in Figure 2, a potential framework user 301 wishing to maintain control of their own personal data and information may choose to download a member interface 300 in the form of an app, for example, originating from transaction enabling entity 100. The interface 300 may be configured to operate on a mobile connectable device 400a owned by user 301.

In order to begin using the interface 300 for transactions within an information management framework such as that shown in Figure 1, the user 301 takes steps to initiate the member interface 300. Within the interface, the user 301 provides, in the form of photographic evidence captured whilst within the member interface environment, two forms of identification: ID1 and ID2. One of those forms of identification may comprise a standard form of proof of identity, for example, a passport, driving licence, national identity card or similar, and the second may comprise a "selfie" or other photograph of the user 301. Those pieces of information are encrypted and stored within a data store 310 within the member interface 300. and held only in the memory of device 400a.

In order to become a verified or attested user of the member interface, the user 301 must have the forms of identification ID1 and ID2 attested by a verified agent 201. The verified agent 201 is an entity which is confirmed to be a verified user of the agent interface 200. In order to verify or attest the user 301, the verified agent 201 views ID1 and ID2 on user device 400a within member interface 300, together with a physical copy of ID1 and in the presence of user 301, and attests, within the interface 300, that the person that they see in front of them matches that shown on the physical copy of ID1 and the stored images of ID1 and ID2. The agent 201 does not record the name or any other identifier of user 301, and only attests within member interface 300 that the user 301 and the evidence ID1 and ID2 held within the member interface 300 are one and the same. From this point onward, the "identity" of user 301 is not required to use the information management framework. It will be appreciated that no record of the name, address, or other identifying detail of user 301 is held or transferred to either agent 201 or transaction enabling entity 100.

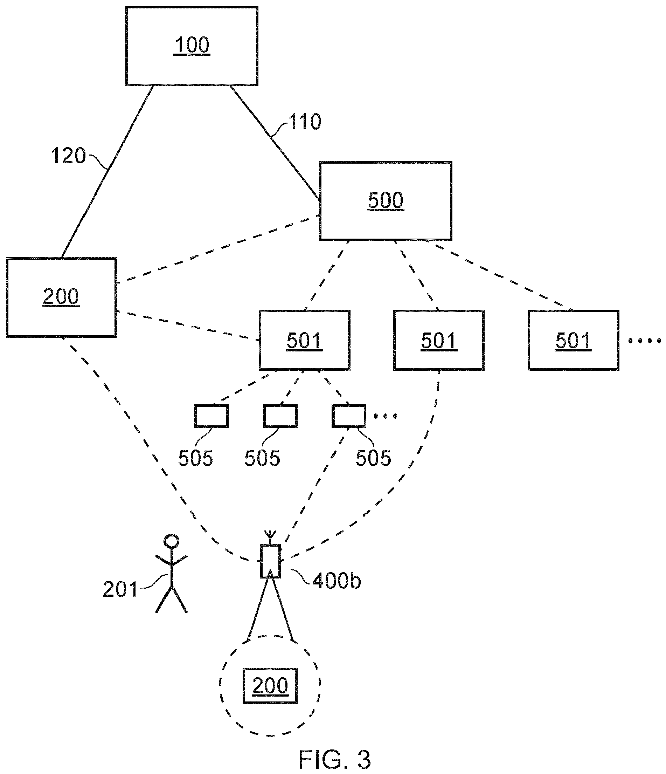

Figure 3 illustrates schematically some key features relating to users of an agent interface for use within an information management framework such as that shown in Figure 1. Unlike the member side of the framework B shown in Figure 1, the agent side of the framework A is not self-sovereign. In other words, there are traceable, verified and known links between users of the agent interface 200 and the transaction enabling entity 100.

One possible hierarchy of agent interface users can be understood by considering that the transaction enabling entity may offer the framework for use in a plurality of jurisdictions 500, each having their own law governing legality of transactions which may be supported by agent interface 200. The transaction enabling entity may determine 110 appropriate operation of the agent interface within a jurisdiction and adapt 120 the agent interface for use in that jurisdiction. Within a given jurisdiction, a plurality of agent interface customers 501 may exist. Each customer 501 may configure operation of the agent app 200 appropriately to support their operation. Each customer may define one or more roles 505, the function of which may be supported by the agent interface 200. A person 201 may be associated with one or more roles for one or more customers and the operation of the agent interface 200 on the network connectable device 400b of the person may allow access to different functionality in dependence upon the role the person 201 adopts for a given customer 501.

In order to begin using the interface 200 for transactions within an information management framework such as that shown in Figure 1, a user 201 takes steps to initiate the agent interface 300. The user 201 may only successfully use the agent interface if it can be demonstrated that that the user 201 is associated with a role set by one or more customers 501 within a jurisdiction 500. The customer 501 may themselves confirm an association with a user 201. The identity of all customers 501 are known to the transaction enabling entity, and the identity of users 201 of the agent interface 200 are known at least to the customers 501. Unlike the member side B of the information management framework, users of the agent interface can therefore be considered to have known identities.

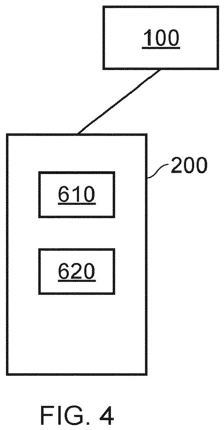

Figure 4 illustrates schematically some aspects of an agent interface for use within an information management framework such as that shown in Figure 1. The transaction enabling entity 100 is able to provide the agent interface 200 with one or more customer configurable mechanisms to interact with the member interface 300. Those mechanisms may include, for example, guidance 610 to be shared between the agent interface 200 and the member interface 300 and building blocks 620 representing legal assertion criteria which may be configured to allow a customer to use the agent interface to build and test a legal assertion against any information held within the member interface, without extracting the personal private information held in the member interface.

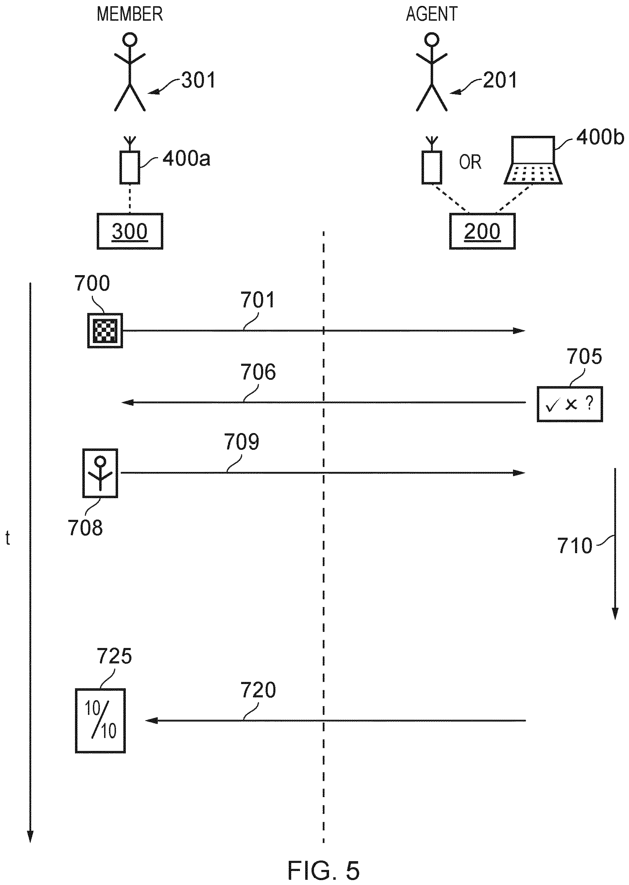

Figure 5 provides a general overview of interactions between a member and an agent operating within an information management framework such as that shown in Figure 1.

By way of example, example interactions between users 201, 301 of the agent and member interfaces respectively are provided. In the example illustrated a user 301 of the member interface visits an authorised agent 201 of the agent interface. The agent in this instance is a doctor or nurse and the user 301 wishes to have a blood test. In the example shown, the desired outcome of the complete process is to add personal information, in the form of a blood test result, to the store of personal data 310 held within member interface 300 on the device 400a associated with user 301.

In one example interaction, the member interface 300 is configured to generate a code, for example, a QR code 700. That QR code may, for example, include a single use hashed or otherwise encrypted "app specific contact tag" or other similar identifier via which a communication network may be configured to send a message back to the member interface 300 (in the form of an app) on user device 400a. The QR code 700 is shown 701 to an agent, for example a doctor or nurse, who is an authorised agent. The agent scans QR code 700 within the agent interface 200 of their network device 400b. The agent interface 200 is then configured to communicate with member interface 300 on user device 400a via a communication network. The agent interface is configured to generate a consent message 705 which explains what the doctor or nurse is about to do and establishes that they are qualified to do so. The message 705 is sent 706 to the member interface 300 on user device 400a. Consent to proceed is sought from member 301. If the member consents to proceeding with the interaction, consent is returned 709 to the agent interface and an (attested) selfie ID2 708 is shown 709 within interface 300 to agent 201. The agent 201 confirms, within the agent interface 200, that ID2 matches the person 301 in front of them. In this example, the agent 201 may then proceed to draw blood and to transfer that blood sample to be tested to a lab technician, who tests the blood and records the result of that test against the anonymous QR code 700 available within the agent interface 200. That offline process is indicated generally as step 710 in Figure 5. It will be appreciated that no record of user 301 name or other personal information is shared with agent interface 200, agent 201 or the lab technician. When the test result is ready, it is received within member interface 300. The transfer of information 720 occurs as a result of the QR code 700 which included an app specific contact tag. The result 725 becomes part of the personal information database 310 held within the member interface 300. The user 301 of the member interface 300 is the owner of that result 725 and has exclusive access to the information held in store 310. It will be appreciated that Figure 5 describes one possible way in which evidence or information can be added to a personal (or self-sovereign) database of personal private information relating to an individual.

Arrangements allow for parameters to be set in relation to information types held within the database of personal private information relating to an individual. For example, some information types may be self-certified, provided and changeable without restriction by the individual. That information, for example, may include height, weight, favourite colour or similar. Some information types may only be added to the database by entities authorised to do so, for example, a vaccinating authority, a blood testing authority, or an antibody test authority. Such information may have parameters associated with a base value. For example, a vaccination information entry may comprise a base value representing whether or not an individual has been vaccinated, and may also include one or more further associated parameters, for example, date of vaccination, expiry of validity of the immunity stemming from the vaccination and so on.

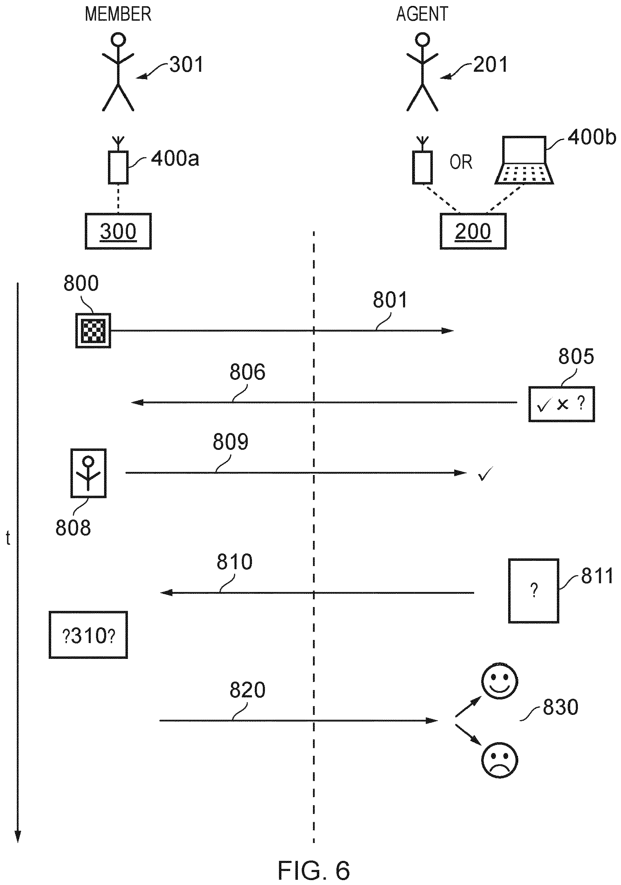

Figure 6 provides a general overview of a different type of interaction between a member and an agent operating within an information management framework such as that shown in Figure 1. In the interaction shown schematically in Figure 6, rather than adding information to a private secure database of information held in a member interface 300 on a member device 400a, an agent may query information held in the member interface, via the agent interface.

As described in relation to Figure 5, the member interface 300 is configured to generate a code, for example, a QR code 800. That QR code may, for example, include a single use hashed or otherwise encrypted "app specific contact tag" or other similar identifier via which a communication network may be configured to send a message back to the member interface 300 (in the form of an app) on user device 400a. The QR code 800 is shown 801 to an agent, for example an airline representative, who is an authorised agent. The agent scans QR code 800 within the agent interface 200 of their network device 400b. The agent interface 200 is then configured to communicate with member interface 300 on user device 400a via a communication network. The agent interface is configured to generate a consent message 805 which explains that the airline representative wishes to query the personal private information held in the member interface nd establishes that they are qualified to do so. The message 805 is sent 806 to the member interface 300 on user device 400a. Consent to proceed is sought from member 301. If the member consents to proceeding with the interaction, consent is returned 809 to the agent interface and an (attested) selfie ID2 808 is shown 809 within interface 300 to agent 201. The agent 201 confirms, within the agent interface 200, that ID2 matches the person 301 in front of them. In this example, the agent 201 may then proceed to query 810 the personal private information via the agent interface. The query 811 takes the form of an assertion, defined by the agent, the parameters of the query are set by one or more assertion criteria created by the transaction enabling entity 100 which act as building blocks to enable a customer to build legal assertions in a given country to be tested against information held within a personal private information store. The queries built from assertion criteria may be such that when information in the member interface is queried, only an answer 830 to the query is returned 820 to the agent interface, rather than the information itself. By way of example, the query 811 may take the form, in the case of an airline, of the question "are you fit to travel?" there may be a number of criteria that a member must meet in order to answer yes to that query. The information itself, which may include information such as: has the member been vaccinated against COVID-19? Does the member have a valid passport? Is the member booked onto this flight? Is not shared or transferred 820 to the agent interface. The only thing which is transferred or shared with the agent interface is a yes/no to indicate whether the personal private information is such that the query result is positive or negative. Furthermore, it will be understood that a member will have been given a general sense of the query being asked of the information at step 806 and thus the answer to a query is only given to the agent interface with the consent of the member. In other words, in testing an assertion against the locally held private store of information 310 within member interface 300, no record of user 301 name or other personal information is shared or transferred to agent interface 200.

Having provided a general overview of operation of the framework, a summary of possible communication between an agent and member in support of operation is provided. Figures 7 to 13 provide examples of steps taken within an information management framework such as that shown in Figure 1. It will be appreciated that Figures 7 to 13 represent general communication steps and that the detail of each step may differ from that shown.

Figure 7 illustrates one possible mechanism for initialisation steps associated with member interface 300 and agent interface 200 as part of a possible interaction process. Prior to any interaction, a user of the agent interface 200 may perform the following steps:
The agent, or author, begins use of the agent interface or application.
A1: The agent selects that they wish to perform an interaction with a member
A2: Since an agent 201 may be associated with more than one customer 501, the agent indicates for which customer they want to perform an interaction with a member;
A3: The agent selects, or may have a restricted or predefined, role which they are assigned for a particular customer;
A4: on the basis of customer and role selections or assignments, there may be a list of one or more possible interactions available to agent (author) operating within the agent interface. The author may, within the agent interface, then select the interaction of interest.
A5: The agent app, based on customer, role and interaction selections or assignments made in steps A1 to A4, is configured to scan a member QR code, if presented.

A member, or subject, begins use of the member interface or application and selects interaction mode.
M1: The member app generates a code, for example, a QR code, including an encrypted single use in app identifier, and displays that code ready for scanning by an agent app.

Figure 8 illustrates possible initialisation steps in support of an interaction between a member and an agent.

If the subject and author wish to interact, the author uses the agent app 200 as follows:
A10: The agent scans, within the agent application, the code generated by the member application.
A11: The agent application is configured to generate pre-interaction guidance, for example, a consent communication prior to full interaction, to be sent to the member application. The interaction guidance, in the form of a consent communication may include a photographic representation of the authorised agent using the agent application. The consent communication sent to the member application may include one ore more of the following: agent name; agent qualification; interaction to be performed; data which is to be captured, for example, timestamp, geotag,; and a request to perform that interaction.
A12: The guidance is processed by member application and agent application as set out in for detail in Figure 10.
A13: As a result of the guidance processing step at A12, the guidance is either:
   A14: accepted by both author (user of the agent application 200) and subject (user of the member application 300); or
   A15: declined by author, subject or both.
A16: If guidance has been accepted by both parties, a more substantive interaction can commence on the basis of the accepted guidance;
A17: If guidance has been declined or not accepted by all parties, the result of the guidance is appropriately processed as set out in more detail in relation to Figure 10; A18: After the guidance has been appropriately processed, the initial interaction between a subject and author is terminated; and
A19: The author application returns to step A5, ready to scan a code associated with a subject (user of the member application).

Figure 9 illustrates some key stages in a possible interaction between a member and an agent. The steps set out in Figure 9 occur after step A13 has been reached in relation to guidance processing. A more substantive interaction commences as follows:
A20: The author, within the agent application can commence a more substantive interaction with the member application of a subject, on the terms set out in the guidance (see Figure 8). The more substantive interaction may fall into one of two main categories: evidence collection, which, amongst other things, may add information to the information store 310 within the member application of a subject; or testing an assertion, which queries information in the information store 310 within a member application 300. The basic terms of the interaction may have been set by the initial guidance process to set up communication between an agent application and a member application (see Figure 8).
A21: A more substantive interaction or "component" of a sequence of interactions between an agent application and a member application may itself be associated with pre-component guidance. The guidance is processed as set out in more detail in relation to Figure 10. For a given substantive interaction, the agent application may determine that the guidance has been accepted by both author and subject (step A22) or that one or more parties has declined the guidance (step A23).
A24: If guidance has been declined or not accepted by all parties, the result of the guidance is appropriately processed as set out in more detail in relation to Figure 10; A25: After the guidance has been appropriately processed, the more substantive interaction (defined by one or more components in an interaction sequence) between a subject and author is terminated; the result of the guidance is appropriately processed (A26 and A27) as set out in more detail in relation to Figure 10; and A28: The author application returns to step A5, ready to scan a code associated with a subject (user of the member application).

If the guidance has been accepted by both parties (step A22), then the agent app can move to process a first component in a substantive component sequence. The substantive component may relate to evidence collection (A29) as set out in more detail in Figure 11 or assertion testing (A30) as described in more detail in relation to Figure 12.

A31: The agent application is configured to determine whether the result of the substantive interaction component has been successful.

If not, then the agent application moves through steps A24 to A28.

If the interaction component has been successful, the guidance associated with
that interaction component is appropriately processed (A32) and the agent application moves (A33) to the next component in a substantive interaction sequence, returning to step A20 or, if the component was the only or last component in the substantive interaction sequence, moves to complete the substantive interaction (A34). The result of the substantive interaction is appropriately processed within the agent application (see: A26 and A27) as set out in more detail in relation to Figure 10; and A28: The author application returns to step A5, ready to scan a code associated with a subject (user of the member application).

As part of processing step A26, the agent application may communicate the result of the interaction to the member application.

M10: The member application may be configured to receive the result from the agent application and write the result of the more substantive application appropriately within member application 300. The member application may, for example, be configured to add a substantive interaction result to a subject transaction log, add information to personal data store 310; set associated parameters of relevance to new information and/or set a "new information" badge within the member application of a given subject.
M11: Once the substantive interaction result has been received and processed, the member application may return the subject to an application home screen.

Figure 10 illustrates possible guidance steps in a possible interaction between a member and an agent. Guidance processing occurs at various stages in the framework set out in detail in Figures 7 to 13. Figure 10 provides an overview of guidance processing which occurs within an agent application (indicated above the dashed line, process steps on side A of two transacting entities); and guidance processing which occurs within a member application (indicated below the dashed line, process steps on side B of the two transacting entities). If guidance is triggered, within an interaction, then appropriate guidance processes are initiated in agent application 200 and member application 300.

On the agent application side A, the following steps may occur:
A40: A check may occur to determine whether there is contextually relevant component guidance for an author in relation to a given component;
A41: If so, that guidance may be formatted and parameters populated. The parameters may be automatically populated or may require some input from an author using the agent application. The guidance maybe a notification (A42) and/or an alert (A43);
A44: If the guidance includes a notification, that notification may be pushed to an agent application message inbox and an unread badge displayed.
A45: If the guidance includes an alert, the agent application may display guidance to an author and may offer an option to accept or decline, if those flags are set in relation to the guidance.
A46: An author may accept the component guidance.
A47: An author may decline the pre-component guidance.
A48: The result of steps A44, A46 and/or A47 are written, within the agent application, to an author transaction log and a new information flag set.
A49: Guidance results are written to an operational data store.

On the member application side B, the following steps may occur:
B40: A check may occur to determine whether there is contextually relevant component guidance for a subject in relation to a given component;
B41: If so, that guidance may be formatted and parameters populated. The parameters may be automatically populated or may require some input from a member or subject using the member application. The guidance may be a notification (B42) and/or an alert (B43);
B44: If the guidance includes a notification, that notification may be pushed to a member application message inbox associated with a subject and an unread badge displayed.
B45: If the guidance includes an alert, the member application may display guidance to a subject and may offer an option to accept or decline, if those flags are set in relation to the guidance.
B46: A subject may accept the component guidance.
B47: A subject may decline the pre-component guidance.
B48: The result of steps B44, B46 and/or B47 are written, within the member application, to a subject transaction log and a new information flag set. Appropriate guidance response may be shared with the agent application and at step A49 subject guidance results are written anonymously to the agent application operational data store.

Figure 11 illustrates some key issues and processing steps of relevance to evidence collection within an information management framework such as that shown in Figure 1.
E1: each evidence type for inclusion within a personal private information store within member application 300 may have one or more characteristics or parameters which should be collected. Such characteristics or parameters may include, for example, a base value and associated parameters such as time of collection, place of collection, type of information; validity or expiry period associated with a type of information and similar.
E2: A user interface may be formatted to allow for collection of all parameters and characteristics of an information or evidence type.
E3: Evidence may be collected via the agent or member application. The evidence collection step may, at a basic level, succeed or fail. If successful, then one or more values may be returned.
E4A; E4M: Within the agent application and the member application evidence/information collection step results are writeable to a transaction log. The results may comprise: success, failure, value(s) and additional associated parameters within the member application (E4M); any such collection results are anonymised within the agent application (E4A) transaction log.
E5: Such results may also be written anonymously within the member application operational data store.
E6: A general "success" or "failure" indication may be set in relation to any evidence/information collection component.

Figure 12 illustrates some key stages in an assertion testing interaction between a member and an agent. It will be appreciated that an assertion to be tested against information held within a data store 310 within member application 300 may be built within the agent application from one or more interaction components. The assertion components from which a substantive assertion sequence may be built may be set by transaction enabling entity 100. There may be sub-assertions to be tested within a larger assertion sequence.

If commencing a substantive assertion test between an agent application and a member application, various steps may occur as follows.
Qi: An assertion may comprise multiple components to be processed. The components may be processed sequentially. An assertion component may generally comprise an assertion criterion or another assertion. If the component is another assertion (nested assertions) then that assertion is processed first before processing the assertion component which triggered initialisation of the substantive assertion transaction between an agent and a member application.
Q2: Each assertion component may have associated guidance. That guidance is processed in line with the principles set out in Figure 10.
Q3: The guidance may be accepted or declined by either of the author (user of agent application) or subject (user of member application).
Q4: If the guidance has been accepted by both author and subject, the member application may proceed to a substantive evaluation phase associated with an assertion component. Evidence/information required by an assertion criterion associated with an assertion component will be assessed. That assessment process is set out in more detail in relation to Figure 13. Some assertions may require some evaluation of evidence in relation to information held by, or accessible to, the agent application, rather than simply requiring assessment of information held within private data store 310 within the member application. As a result, some flow of information from the agent application to the member application maybe required as part of the evidence evaluation phase. An example of such evidence may comprise, for example, agent qualification.
Q5: After checking for all evidence types of relevance to an assertion criterion; and in dependence upon determining appropriate evidence is available, the logic of the assertion criterion can be evaluated (based on the evidence/information) and it can be determined whether the assertion criterion is true or false. It will be appreciated that an absence of evidence or incomplete evidence may mean that it is impossible to conclusively process the evidence to reach an assessment of whether the assertion criterion result is true or false. If this is the case, then the process fails and the failure is processed (Q6) in line with the principles set out in Figure 10.
Q7: If it is possible to determine whether the assertion criterion is true or false, the result is processed in line with the principles set out in relation to Figure 10;
Q8: If there are further assertion components to be processed in relation to a substantive assertion sequence, appropriate iterative processing steps are taken.
Q9: After evaluating all assertion components within a substantive assertion sequence, an overall evaluation of the logic of the substantive assertion sequence can be made and a determination of whether the overall assertion is true or false set.
Q10: The substantive assertion sequence can be determined to be true or false.
Q11: Within the member application the result of the assertion can be written to the subject transaction log and a new info badge set. and the substantive assertion sequence may be such that
Q12: The member application may communicate with the agent application to return the result of the substantive assertion sequence. The result can be written to and stored within the agent operational data store and a new info badge set.
Q13: The assertion result can be written to an author transaction log within the agent application and a new information badge set.
Q14: Within the agent application, an author may receive the result that the assertion (set by the substantive assertion sequence) has been found to be true or false.

Figure 13 illustrates some key stages in evidence evaluation performed within an information management framework such as that shown in Figure 1. As described in relation to Figures 11 and 12, evidence/information held within the member application associated with a member or subject can be of various types. Each item of information or evidence may include one or more components. For example, in relation to a "symptom check" for item of evidence, various components may be associated with that evidence item: temperature; cough; loss of smell or taste and similar. Evidence components may comprise: a document; text data; a value; an interval; a temperature; a date; a validity period; an object; a Boolean operator; and other similar information types.
I1: If an assertion criterion requires an assessment of evidence, the evidence to be assessed is identified.
I2: An assessment can be made of the evidence or an evidence component of interest there are within member data store 310. In one example, an assessment may be made of how many valid instances of an evidence component of interest there are within the data store 310. Some assertion components may require multiple instances of valid evidence, in some arrangements, those instances of evidence must have consecutive day date stamps associated with them; in some arrangements only the most recent evidence component may be valid or of use in making an evaluation or assessment.
I3: An assessment can be made of whether evidence or an evidence component required by an assertion component is found within data store 310;
I4: An assessment can be made of whether the evidence found has expired;
I9: If no evidence was found, or it has been found but has expired; the evidence component can be marked as missing.
I5: The member application may, on the basis of the received assertion component, be configured to assess how many valid instances of an evidence component are within the data store 320.
16: The member application may, on the basis of the received assertion component, be configured to assess various aspects of any particular evidence type. For example: If the evidence type is a document or object, it needs to exist within the data store. If the evidence component or type is a time interval or temperature, it may need to have passed or exceeded a predetermined threshold to count as valid. If the evidence component is a Boolean, it may need to be true (or false) in order to be valid. If an evidence component is text data it may simply need to exist. If the evidence component is a numerical value it may need to match a selected value or lay within a predetermined range.
I7: If the evidence required has been found (I3); it has not expired (I4) and has been found to meet any frequency criterion (I5) and has been found to meet a validity condition (16) then the evidence component of interest is marked as present (18). If the validity condition is not met then the evidence component is marked as missing (I9). I10: The process (I1 to I9) is repeated for all evidence entries of interest or relevance to a particular assertion component until all evidence components associated with that assertion components have been checked.
I11: After checking for all evidence components, the member application may be configured to make an evaluation of whether the evidence required by an assertion component is present in data store 320.
I12: The result of the evidence evaluation process is to return whether the evidence type is found or not. That result can be used in an assertion interaction as described in relation to Figure 12.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A secure data processing apparatus configured to securely process user data owned by a user, said secure data processing apparatus comprising:
a self-sovereign domain comprising:
a trusted bus coupled with local trusted data storage configured to store the user
data owned by the user at the secure data processing apparatus and local trusted data processing apparatus configured to process user data in the local trusted data storage at the secure data processing apparatus, to process incoming user-related information received over said trusted bus and to generate outgoing user-related information;
a self-sovereign domain controller comprising:
transaction logic coupling said trusted bus of the self-sovereign domain with an agent bus of an agent domain, said transaction logic being configured to:
(i) seek permission from the user in relation to any interaction between the agent domain and the self-sovereign domain; and subject to permission to an interaction being granted by the user,
(ii) allow the agent domain to query the user data using one or more predetermined query elements, such that the local trusted data processing apparatus generates outgoing user-related information in response to the query elements in which inclusion of the user data is prevented.

2. A secure data processing apparatus according to claim 1, wherein the user and an entity using the agent domain comprise verified entities within a secure self-sovereign information management system.

3. A secure data processing apparatus according to claim 1 or claim 2, wherein the self-sovereign domain controller comprises:
identity logic configured to:
collect at least two forms of identity and store those forms of identity as user data in the local trusted data storage;
display the two forms of identity on request of the user;
receive an indication via the agent bus from a verified agent that the two forms of identity are attested to match the user; and store that the user is a verified entity as new data in the local trusted data storage.

4. A secure data processing apparatus according to any preceding claim, wherein the transaction logic is further configured to:
generate, using the local trusted data processing apparatus, an indication that the user wishes to initiate an interaction with an agent;
receive that generated indication at the trusted bus and transfer that indication to an agent via the agent bus;
receive an agent response at the agent bus, the agent response including one or more indication of a parameter associated with an interaction between the agent domain and the self-sovereign domain;
transfer the agent response from the agent bus to the trusted bus; and
generate, using the local trusted data processing apparatus, a user permission request based upon the agent response.

5. A secure data processing apparatus according to claim 4, wherein the indication that the user wishes to initiate an interaction includes a single use contact identifier via which a communication network can contact the self-sovereign domain controller.

6. A secure data processing apparatus according to claim 4 or claim 5, wherein the generated indication comprises a visual indication to be shown to an agent.

7. A secure data processing apparatus according to any preceding claim, wherein the local trusted data processing apparatus is configured, in response to the user permission request being granted by a user, to generate an indication of consent and the transaction logic is further configured to transfer the indication of consent from the trusted bus to the agent bus and allow an agent read only access within the self-sovereign domain to a form of identity stored as user data in the local trusted data storage.

8. A secure data processing apparatus according to any preceding claim, wherein the query formed from one or more predetermined query elements is such that when user data in the local trusted data storage is queried, only an answer to the query is returned to the agent bus of the agent domain, not any element of the user data itself.

9. A secure data processing apparatus according to any preceding claim, wherein the query formed from one or more predetermined query elements comprises a binary query having a yes or no response, based upon an interrogation of whether the user data meets one or more criteria set by the query elements, and the only thing returned to the agent bus of the agent domain is a yes or no to indicate whether the user data meets the one or more criteria set by the query elements.

10. A secure data processing apparatus according to any preceding claim, wherein the transaction logic is further configured to:
receive new user data from an agent at the agent bus, the new user data including a request to include that new user data in the local trusted data storage;
transfer that request to include new user data in the local trusted data storage to a user via the trusted bus; and, subject to receiving a positive response from a user;
allow interaction between the agent domain and the self-sovereign domain and
transfer the new user data from the trusted bus to the agent bus; and
store, using the local trusted data processing apparatus, the new user data in the local trusted data storage.

11. The secure data processing apparatus of any preceding claim, wherein the self-sovereign domain controller further comprises: cryptographic logic coupling the trusted bus of the self-sovereign domain with an agent bus of an agent domain, said coupling logic being configured to ensure that incoming encrypted user-related information received over said agent bus is decrypted and provided over said trusted bus as said incoming user-related information and to ensure that outgoing user-related information is encrypted and provided over said agent bus as encrypted outgoing user-related information.

12. A secure data processing method for securely processing user data owned by a user, said method comprising:
providing a self-sovereign domain comprising:
a trusted bus coupled with local trusted data storage configured to store the user data owned by the user at the secure data processing apparatus and local trusted data processing apparatus configured to process user data in the local trusted data storage at the secure data processing apparatus;
processing incoming user-related information received over said trusted bus and generating outgoing user-related information using said user data and local trusted data processing apparatus and;
coupling said trusted bus of the self-sovereign domain with an agent bus of an agent domain using a self-sovereign domain controller, the domain controller comprising:
transaction logic configured to:
(i) seek permission from the user in relation to any interaction between the agent domain and the self-sovereign domain; and subject to permission to an interaction being granted by the user,
(ii) allow the agent domain to query the user data using one or more predetermined query elements, such that the local trusted data processing apparatus generates outgoing user-related information in response to the query elements in which inclusion of the user data is prevented.

13. Data processing apparatus configured to interact with secure user data owned by a user and stored only in local trusted data storage controlled by the user, said data processing apparatus comprising:
an agent domain comprising: an agent bus coupled with data storage configured to store agent data and data processing apparatus configured to process agent data and generate outgoing user-related information;
an agent domain controller comprising:
agent transaction logic coupling said agent bus of the agent domain with a trusted bus of a self-sovereign domain associated with a user, said agent transaction logic being configured to:
(i) seek permission from the user in relation to any interaction between the agent domain and the self-sovereign domain; and subject to permission to an interaction being granted by the user,
(ii) query the user data using one or more predetermined query elements, such that the self-sovereign domain generates user-related information in response to the query elements in which inclusion of the user data is prevented.

14. A data processing method for interacting with secure user data owned by a user and stored only in local trusted data storage controlled by the user, said data processing method comprising:
providing an agent domain comprising: an agent bus coupled with data storage configured to store agent data and data processing apparatus configured to process agent data and generate outgoing user-related information;
processing agent data and generating outgoing user-related information using said agent data and data processing apparatus and:
coupling said agent bus of the agent domain with a trusted bus of a self-sovereign domain associated with a user using an agent domain controller the domain controller comprising:
agent transaction logic configured to:
(i) seek permission from the user in relation to any interaction between the agent domain and the self-sovereign domain; and subject to permission to an interaction being granted by the user,
(ii) query the user data using one or more predetermined query elements, such that the self-sovereign domain generates user-related information in response to the query elements in which inclusion of the user data is prevented.

15. A computer program product operable, when executed on a computer, to perform the method steps of claim 12 or claim 14.
